# EUROPÄISCHE PATENTSCHRIFT

(11) **EP 1 241 211 B1**
(45) Veröffentlichungstag und Bekanntmachung des Hinweises auf die Patenterteilung: **18.10.2006**
(21) Anmeldenummer: 02004292.5
(22) Anmeldetag: 28.02.2002
(51) Int. Cl.: C08K 3/00, C09D 7/00, C08J 3/12

(54) **Pulverförmige Verdickungsmittel-Zubereitungen und ihre Verwendung**
Thickening compositions in powder form and their use
Compositions d'épaississants pulvérulents et leur utilisation

(30) Priorität: 12.03.2001 DE 10111791
(43) Veröffentlichungstag der Anmeldung: 18.09.2002
(73) Patentinhaber: Borchers GmbH, 40764 Langenfeld (DE)
(72) Erfinder: Manshausen, Peter, Dr., 50767 Köln (DE); Sauer, Frank Dr., 40764 Langenfeld (DE); Steinhoff, Thomas, Dr., 51377 Leverkusen (DE); Mazanek, Jan, Dr., 51061 Köln (DE); Wamprecht, Christian, Dr., 41472 Neuss (DE); Spinger, Christel, 51371 Leverkusen (DE); Priesnitz, Uwe, Dr., 42657 Solingen (DE); Happe, Peter, 42655 Solingen (DE)
(74) Vertreter: Pettrich, Klaus-Günter

(56) Entgegenhaltungen:
- US-A- 4 155 892
- US-A- 4 436 862

## Beschreibung

Die Erfindung betrifft pulverförmige Verdickungsmittel-Zubereitungen, die sich besonders gut in wässrige Systeme einarbeiten lassen und ihre Verwendung als rheologische Additive zur Verdickung vorzugsweise wässriger Systeme.

Verdickungsmittel auf Polyurethanbasis für wässrige Systeme werden in zahlreichen Veröffentlichungen beschrieben (vgl. z. B. DE-A 1 444 243, DE-A 3 630 319, EP-A-0 031 777, EP-A-0 307 775, EP-A-0 495 373, US-A 4 079 028, US-A 4 155 892, US-A 4 499 233 oder US-A 5023 309).

Diesen Verdickungsmitteln des Standes der Technik gemeinsam ist das gleichzeitige Vorliegen von (i) hydrophilen Segmenten in einer Menge von mindestens 50 Gew.-%, (ii) hydrophoben Segmenten in einer Menge von maximal 10 Gew.-% und (iii) Urethangruppen. Unter "hydrophilen Segmenten" sind hierbei insbesondere Polyetherketten mit mindestens 5 Kettengliedern zu verstehen, deren AlkylenoxidEinheiten zumindest zu 60 Mol-% aus Ethylenoxideinheiten bestehen. Unter "hydrophoben Segmenten" sind hierbei insbesondere Kohlenwasserstoff-Segmente mit mindestens 6 Kohlenstoffatomen zu verstehen.

Aus der US 4 436 862 ist eine pulverförmige Verdickungsmittel-Zusammensetzung bekannt, die ein Urethangruppen aufweisendes in Wasser lösliches Verdickungsmittel sowie ein Smektit Schichtsilikat enthält.

Diese Polyurethanverdicker eignen sich als Hilfsmittel für die Einstellung von rheologischen Eigenschaften von wässrigen Systemen wie Auto- und Industrielacken, Putz- und Anstrichfarben, Druck- und Textilfarben, Pigmentdruckpasten, pharmazeutischen, kosmetischen Zubereitungen, Pflanzenschutzformulierungen, Füllstoffdispersionen usw.

Obwohl die bekannten Polyurethanverdicker eine breite Anwendung finden, weisen sie wesentliche Nachteile auf. Die meisten angebotenen Produkte werden als flüssige Zubereitungen angeboten, wodurch eine Verdünnung der Lacke und/oder Farben verursacht wird. Dies wirkt sich insbesondere bei Zudosierung der gegebenenfalls vorverdünnten Verdickungsmittel zu der bereits produzierten Farbe/dem Lack negativ auf deren Feststoffgehalt und andere Eigenschaften aus. Darüber hinaus ist die genaue Dosierung von flüssigen, gegebenenfalls auf Konzentrationen < 20 % verdünnten Verdickerzubereitungen in vielen Produktionsanlagen nicht oder nur technisch aufwendig möglich.

Ein weiterer Nachteil z.B. der flüssigen ca. 50 %igen Verdickerformulierungen liegt in einem hohen Platzbedarf nicht nur der Produkte in Lieferform, sondern insbesondere der (in der Regel 1:9) vorverdünnten Gemische. Hinzu kommt, dass die bekannten Polyurethanverdicker-Formulierungen in der Regel Lösemittel und/oder Emulgatoren enthalten, was für moderne, VOC-arme Beschichtungen nachteilig ist und außerdem bei deren Freisetzung Gefahren für die Umwelt verursachen kann.

Auch die bisher bekannten pulverförmigen, zu 100 % aus Verdicker bestehenden Produkte sind nicht optimal: sie lassen sich häufig nur schwer in Lacke bzw. Farben einarbeiten und führen so zur Klumpenbildung in den Lackmischungen. Darüber hinaus ist ihre Wirkung oft nicht ausreichend. Auch die Herstellung fester Verdickungsmittel kann schwierig sein, da deren Inhaltsstoffe (Wirkstoffe) meist bei Raumtemperatur wachsartig sind, so dass sich keine riesel- und lagerfähigen Pulver herstellen lassen.

Diese Beispiele zeigen, dass ein Bedarf an neuen pulverförmigen Verdickungsmitteln auf Polyurethanbasis besteht, die pulverförmig und riesel- und lagerfähig sind und sich leicht einarbeiten lassen und zu Lacken und/oder Farben mit guten rheologischen Eigenschaften führen.

Diese Aufgabe konnte nun dadurch gelöst werden, dass der Polyurethanverdicker mit einem bei Raumtemperatur festen Träger so vermischt wird, dass ein rieselfähiges Pulver erhalten wird, das sich leicht in Farben und/oder Lacke und andere wässrige Systeme einarbeiten lässt und diesen ein hervorragendes rheologisches Verhalten verleiht.

Gegenstand der vorliegenden Erfindung ist demzufolge eine pulverförmige Verdickungsmittel-Zubereitung, hergestellt durch Überführung von Gemischen bestehend aus
a) mindestens einem Urethangruppen-aufweisenden, in Wasser löslichen oder dispergierbaren Verdickungsmittel in einer Menge von 0,5 bis 90 Gew.-%, bezogen auf das Gesamtgemisch,
b) mindestens einem bei Raumtemperatur festen wasserlöslichen Stoff ausgewählt aus Cellulose, Zucker, wasserlösliche Kohlenhydrate, wasserlösliche (Co)Polymer-Salze der Acryl-, Methyacryl- oder Asparaginsäure oder Harnstoff in einer Menge von 0,5 bis 90 Gew.-%, bezogen auf das Gesamtgemisch, wobei die Gesamtmente der Komponenten (a) und (b) mindestens 80 Gew.-% beträgt,
c) gegebenenfalls einem nichtionischen (gegebenenfalls) aromatischen oder aliphatischen Emulgator und gegebenenfalls
d) weiteren Hilfsmitteln, wobei der Gewichtsanteil der Komponenten (c) und
(d) bei maximal 20 Gew.-%, bezogen auf das Gesamtgemisch, liegt,
in eine gelöste, suspendierte oder geschmolzene Form, wobei im Fall der Überführung in eine gelöste bzw. suspendierte Form sich anschließend ein Trocknungsverfahren anschließt und im Fall der Überführung in geschmolzener Form die Schmelze abgekühlt wird. In allen Fällen werden danach die erhaltenen Feststoffe gegebenenfalls durch Vermahlung in Pulverform überführt.

Gegenstand der Erfindung ist auch die Verwendung dieser Verdickungsmittel-Zubereitungen zur Einstellung der rheologischen Eigenschaften wässriger Systeme, vorzugsweise wässriger Kraftfahrzeug- und Industrielacke, Putz- und Anstrichfarben, Druck- und Textilfarben, Pigmentdruckpasten, wässriger pharmazeutischer, kosmetischer Formulierungen, Pflanzenschutzformulierungen, Füllstoff- und Pigmentdispersionen, Zubereitungen von Waschmitteln, Klebstoffen, Wachsen und Polituren sowie für die Erdölförderung.

Die Komponente (a) der erfindungsgemäßen Zubereitungen besteht aus Polyurethanverdickungsmitteln der an sich bekannten Art mit hydrophilen bzw. hydrophoben Segmenten und Urethangruppen.

Bei der Komponente (b) handelt es sich um bei Raumtemperatur feste, wasserlösliche Stoffe, die inert gegenüber den zu verdickenden wässrigen Systemen sind.

Bei der Komponente (b) handelt es sich um mindestens einen bei Raumtemperatur festen wasserlöslichen Stoff ausgewählt aus Cellulose, Zucker, wasserlösliche Kohlenhydrate, wasserlösliche (Co)Polymersalze der Acryl-, Methacryl- oder Asparaginsäure oder Harnstoff.

Bei der Auswahl der geeigneten Komponente (b) ist darauf zu achten, dass sie sich durch äußere Krafteinwirkung, z.B. Rührwerke, nicht verändert, sondern inert gegenüber den zu verdickenden wässrigen Systemen bleibt. Auch die Temperaturstabilität bei den üblicherweise verwendeten Herstellungs- und Verarbeitungsbedingungen muss gewährleistet sein.

Bei der Komponente (c) handelt es sich vorzugsweise um mindestens eine Verbindung der Formeln I), II) und III).

So können Verbindungen der Formel (I)

R-[O-(Q')ₓ-H]_{y} (I),

in welcher
- R: für einen gegebenenfalls Substituenten aufweisenden aromatischen und/oder alkaromatischen Kohlenwasserstoffrest mit 6 bis 50 Kohlenstoffatomen, vorzugsweise für eine, gegebenenfalls mehrere aromatische Ringe umfassenden und/oder inerte Substituenten aufweisenden aromatischen oder alkaromatischen Kohlenwasserstoffrest mit 6 bis 40 Kohlenstoffatomen steht,
- Q': für Alkylenoxideinheiten steht, wie sie bei der Alkoxylierung von Hydroxylgruppen enthaltenden Startermolekülen mit C₂-C₄-Alkylenoxiden entstehen, wobei Q' vorzugsweise für Ethylenoxid- und /oder Propylenoxid-Einheiten steht,
- x: für eine Zahl von 1 bis 300, vorzugsweise 5 bis 100 und besonders bevorzugt 10 bis 30 steht und
- y: für eine Zahl von 1 bis 20, vorzugsweise 1 bis 10 und besonders bevorzugt 1 bis 4 steht,
als Komponente (c) eingesetzt werden;
weiterhin werden Verbindungen der allgemeinen Formel II)

R₂-[EOₓ-PO_{y}]-H (II),

in welcher
- R₂: für einen linearen Rest mit 6 bis 15 Kohlenwasserstoffatomen steht,
- EO, PO: Ethylenoxid- bzw. Propylenoxidreste bedeuten,
- x: für eine Zahl von 3 bis 20
- y: für eine Zahl von 0 bis 6
steht,
als Komponente (c) eingesetzt.

Es handelt sich bei den Komponenten (c) um an sich bekannte Alkylierungsprodukte von geeigneten Startermolekülen, wobei als Alkylenoxide insbesondere Ethylenoxid, Propylenoxid oder die isomeren Butylenoxide in Betracht kommen. Vorzugsweise handelt es sich bei den Alkylenoxiden jedoch um Ethylenoxid oder um Gemische aus Ethylenoxid mit Propylenoxid. Grundsätzlich möglich ist die Verwendung unterschiedlicher Alkyenoxide nacheinander, so dass unterschiedliche Polyetherblöcke entstehen.

Geeignete Startermoleküle sind insbesondere der oben gemachten Definition von R, x und y entsprechende mono- und polyfunktionelle Phenole, z.B. Phenol und Verbindungen entsprechend den folgenden Formeln (IV) und (V). 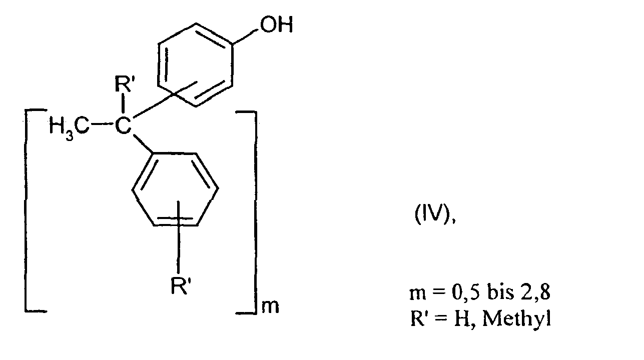 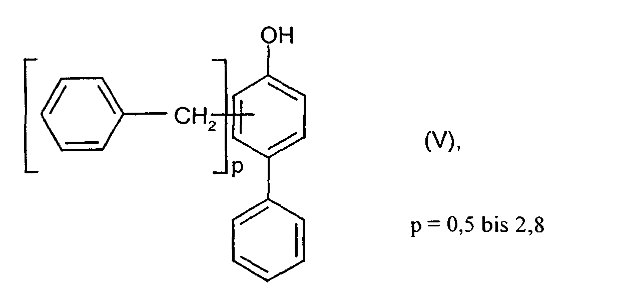 (m und p sind statistische Mittelwerte)

Als Komponente (c) werden vorzugsweise Verbindungen der Formel

R₂-[(Q₂-)ₓH]_{y} (III),

verwendet, worin
- R₂: für einen gegebenenfalls verzweigten und/oder ungesättigten aliphatischen Rest mit 6 bis 22, bevorzugt 8 bis 16, besonders bevorzugt 8 bis 12 Kohlenstoffatomen,
und/oder für einen cycloaliphatischen Rest mit 6 bis 10 Kohlenstoffatomen
und/oder für einen heterocyclischen Rest mit 5 bis 12, bevorzugt 5 bis 7 Ringatomen steht,
sowie er durch Abtrennung des aktiven Wasserstoff von entsprechenden Alkoholen, Aminen, Carbonsäuren und /oder Amiden entsteht,
- Q₂: für Alkylenoxideinheiten steht, wie sie bei der Alkoxylierung von Hydroxylgruppen enthaltenden Startermolekülen mit C₂-C₄-Alkylenoxiden entstehen, wobei Q₂ vorzugsweise für Ethylenoxid- und/oder Propylenoxid-Einheiten steht,
- x: für eine Zahl von 1 bis 30, vorzugsweise 2 bis 20 und besonders bevorzugt 4 bis 10 steht und
- y: für eine Zahl von 1 bis 10, vorzugsweise 1 bis 6 und besonders bevorzugt 1 und 2 steht.

Geeignete Startermoleküle für die Komponente (c) sind beispielsweise: n-Hexanol, n-Octanol, Isooctanol, n-Nonanol, Isononanol, n-Decanol, isocyanat-Undecanol, Undecanol, n-Dodecanol, Tetradecanol, Hexdadecanol sowie deren Gemische, so wie sie beispielsweise bei technischen Synthesen oder aus Naturprodukten gewonnen werden. Weitere Beispiele sind Cyclohexanol, Methylcyclohexanol, Hydroxytetralin, n-Hexylamin, n-Octylamin, n-Dodecylamin, Dodecansäureamid, Caprolactam.

Weitere, gegebenenfalls mitverwendete Hilfsmittel (d) sind beispielsweise mehrwertige Alkohole wie beispielsweise Propylenglykol gegebenenfalls in Gemischen mit Wasser, die u. a. zur Formulierung der Einzelkomponenten dienen können. Auch Colöser wie N-Methylpyrrolidon oder Lösungsmittel(gemische) können eingesetzt werden.

In den erfindungsgemäßen Verdickungsmittel-Zubereitungen liegt die Komponente (a) in einer Menge von 0,5 bis 90, vorzugsweise 5 bis 70 und besonders bevorzugt 20 bis 60 Gew.-%, bezogen auf Gesamtgemisch, die Komponente (b) in einer Menge von 0,5 bis 90, vorzugsweise 5 bis 60, besonders bevorzugt 10 bis 40 Gew.-%, bezogen auf Gesamtgemisch vor, wobei die Gesamtmenge der Komponenten (a) und (b) bei mindestens 80 Gew.-%, vorzugsweise mindestens 90 Gew.-%, bezogen auf Gesamtgemisch, beträgt.

Neben diesen erfindungswesentlichen Einzelkomponenten können, wie bereits ausgeführt, noch weitere Hilfsmittel (c) und (d) vorliegen. Der Gewichtsanteil dieser Hilfsmittel liegt jedoch bei maximal 20 Gew.-%, bezogen auf das Gewicht des Gesamtgemisches.

Die Herstellung der erfindungsgemäßen Zubereitungen kann in an sich bekannter Weise erfolgen. So können beispielsweise Komponenten (a), (b), (c) und (d) zunächst in eine wässrige Lösung oder Suspension überführt werden und nach bekannten Trocknungsverfahren, z.B. nach dem Sprühtrocknungs-/Wirbelschichttrocknungsverfahren in erfindungemäße Zubereitungen überführt werden. Die Komponenten (a), (b), (c,) und (d) können aber auch in einem Mischwerkzeug gegebenenfalls bei erhöhter Temperatur innig vermischt werden und anschließend durch Zerkleinerung oder Mahlung in die Pulverform gebracht werden. Besonders gut geeignet ist das Vermischen der erfindungsgemäßen Komponenten bei erhöhter Temperatur.

Die gebrauchsfertigen erfindungsgemäßen Zubereitungen stellen rieselfähige, feste Gemenge dar, die auch bei Lagerung nicht zusammenbacken. Ihre Lagerfähigkeit ist in der Regel mindestens genauso lang wie die einer entsprechenden flüssigen Zubereitung.

Die erfindungsgemäßen Zubereitungen können den zu verdickenden wässrigen Systemen sowohl zu Beginn, während oder auch nach dem Produktionsprozess zugesetzt werden. Besonders die Möglichkeit der nachträglichen Zugabe der erfindungsgemäßen Verdicker ist für die Praxis vorteilhaft.

Ein weiterer Vorteil der erfindungsgemäßen Zubereitungen liegt in ihrer Verträglichkeit mit den zu verdickenden wässrigen Systemen, z.B. Dispersionsfarben, was eine leichte Einarbeitbarkeit der Verdickungsmittel ermöglicht, wobei gleichzeitig die sogenannte Reifezeit der erhaltenen verdickten Zubereitungen, d.h. die Zeit bis zum Erreichen der maximal möglichen Viskosität im Vergleich zu 100 %igen festen Verdickern, in der Regel wesentlich verkürzt wird.

Besonders bemerkenswert ist die Beobachtung, dass die Verdickungswirkung der erfindungsgemäßen Zubereitungen im Vergleich zu den entsprechenden flüssigen Formulierungen nicht oder nur unwesentlich beeinflusst wird.

Die erfindungsgemäßen Zubereitungen eignen sich zur Verdickung von wässrigen bzw. überwiegend wässrigen Systemen wie Farben, Druck- und Pigmentpasten, Füllstoff- und Pigmentdispersionen, Textil-, Leder- und Papierhilfsmittel, Zubereitung für die Erdölförderung, Zubereitungen von Waschmittel, Klebstoffen, Wachsen, für Polituren, Formulierungen für pharmazeutische und veterinäre Zwecke, Pflanzenschutzzubereitungen, kosmetische Artikel usw. Auch das Wasser selbst kann mit den erfindungsgemäßen Polyurethanverdickem angedickt werden, um dann gegebenenfalls mit weiteren Zusätzen versetzt zu werden oder selbst zu wässrigen Zubereitungen zugesetzt werden.

Die erfindungsgemäßen Verdickungsmittel-Zubereitungen eignen sich nicht nur zur Verdickung von rein wässrigen Systemen, sondern auch von solchen Systemen, die anteilmäßig organische Lösungsmittel oder andere flüchtige Zusätze wie beispielsweise mehrwertige Alkohole enthalten. Selbstverständlich können die zu verdickenden wässrigen Systeme die in solchen Systemen üblichen Hilfs- und Zusatzmittel wie Entschäumer, Fließ- und Verlaufhilfsmittel, Füllstoffe, Pigmente und dergleichen enthalten.

Beispiele für wässrige Systeme, die erfindungsgemäß verdickt werden können, sind wässrige Polyacrylatdispersionen, wässrige Dispersionen von Mischpolymerisaten olefinisch ungesättigter Monomeren, wässrige Polyvinylacetatdispersionen, wässrige Polyurethandispersionen, wässrige Polyesterdispersionen, 2-Komponenten-Lacke und insbesondere gebrauchsfertige Zubereitungen der oben bereits angesprochenen Art und Basis derartiger Dispersionen.

Im Falle der Verwendung der erfindungsgemäßen Zubereitungen zur Verdickung von Dispersionsfarben führt dies oftmals zu einem verbesserten Verlauf dieser Systeme und zu einer verbesserten Oberflächenbeschaffenheit der aus derartigen Dispersionsfarben hergestellten Filme. Ein weiterer Vorteil der erfindungsgemäßen Zubereitungen liegt in dem Umstand begründet, dass ihr Einsatz in pigmentierten bzw. Füllstoffe enthaltenden Dispersionsfarben oftmals zu einer verbesserten Benetzbarkeit dieser Festkörper führt, wodurch der Dispergierprozess, d. h. die Herstellung der gebrauchsfertigen Dispersionsfarben erleichtert wird. Lackfilme, die unter Verwendung von erfindungsgemäß verdickten Dispersionsfarben hergestellt werden, zeichnen sich im übrigen durch einen verbesserten Glanz aus.

### Beispiele

### Herstellung der pulverförmigen Verdickerformulierungen

### Vergleichsbeispiel 1

30 g pyrogene Kieselsäure (Sipernat® 50S) werden in einem Kunststoffbecher mit 90 g einer vorverdünnten Verdickerlösung (2 Teile Borchigel® L 76 (Borchers GmbH, Monheim, DE) - ein gemäß US-A 5 936 019, Beispiel 4, erhältlicher Polyurethanverdicker - / 1 Teil Wasser) mit einer Holzlatte verrührt und anschließend in einer Labormühle gleichmäßig vermischt. Dieses Gemisch wird im Vakuumtrockenschrank bei 70°C bis zur Gewichtskonstanz getrocknet.

### Beispiel 2

Man mischt 333,3 g Borchigen® 630 (Borchers GmbH, Monheim, DE - D,L-Asparaginsäuretetranatriumsalz; CAS-Nr. 144538-83-0) mit 100 g Borchigel® L 76 und reduziert diese Mischung in einem Rotationsverdampfer (70°C) bis zur Zähflüssigkeit. Auf einer Aluschale wird noch weiteres Wasser im Vakuumtrockenschrank (70°C) entfernt, bis das Produkt hart und nicht mehr klebrig ist. Dieses wird dann in einer Labormühle zerkleinert und das Granulat weiter bis zur Gewichtskonstanz getrocknet.

### Beispiel 3

In einem 500-ml-Becherglas werden 50 g PUR-Verdickungsmittel gemäß EP-B 0 639 595 (entspr. US-A 5 594 087) und 50 g Harnstoff vorsichtig bei 130°C erwärmt, bis eine homogene Schmelze entsteht (ca. 15 - 20 Minuten). Dabei ist darauf zu achten, dass die Temperatur nicht über 133°C ansteigt, um die Abspaltung von Ammoniak aus dem Harnstoff zu verhindern bzw. zu minimieren. Danach lässt man die Schmelze innerhalb 1 - 2 Stunden abkühlen, wobei diese erstarrt.

Nach dem Erstarren wird diese Schmelze in einer Analysenmühle (Typ IKA M 20) zu einem feinteiligen Pulver zermahlen. Hierbei ist darauf zu achten, dass aufgrund der Scherbelastung das Mahlgut nicht zu stark erwärmt wird (< 50°C). Abschließend wird das erhaltene Produkt mittels eines feinmaschige Siebes (Maschenweite 1 mm) von eventuell vorhandenen, groben Anteilen durch Absieben befreit. Das Produkt fällt als feines, weißes Pulver an, das einen Schmelzpunkt von 132 - 133°C aufweist.

Nach dem gleichen oben beschriebenen Prinzip können auch pulverförmige Verdickerwirkstoffe auf - bei RT - festen, wasserlöslichen Stoffen hergestellt werden, die einen Gewichtsanteil von beispielsweise 25 % oder 65 % an festem Polyurethanverdickerwirkstoff aufweisen.

### Vergleichsbeispiel 4

In einem 250-ml-Becherlgas werden 25 g PUR-Verdickungsmittel gemäß EP-B 0 639 595 (entspr. US-A 5 594 087) in 50 g Aceton unter leichtem Erwärmen (ca. 40°C) gelöst. In diese Lösung werden 75 g Celluloseether eingetragen, so dass eine breiartige Masse entsteht. Diese wird in eine Abdampfschale überführt und im Vakuumtrockenschrank ca. 30 Minuten getrocknet (100 mbar/60°C). Der resultierende Feststoff wird durch Mörsern in ein granulatartiges Material von leicht beiger Farbe überführt, welches ab ca. 65°C erweicht. Als Celluloseether können hierbei verschiedene Typen mit unterschiedlichen Molgewichten verwendet werden.

### Vergleichsbeispiel 5

In einem 1-1-Dreihalskolben mit KPG-Rührwerk und seitlich aufgesetzter Destillationsbrücke werden 35 g PUR-Verdickungsmittel gemäß EP-B 0 639 595 (entspr. US-A 5 594 087) und 65 g Harnstoff in 200 ml Ethanol suspendiert. Diese Mischung wird einer Destillation unter Normaldruck unterworfen, wobei die anfängliche Suspension kurz vor dem Siedepunkt bei ca. 80°C in eine echte Lösung übergeht. Nach vollständigem Abdestillieren des Ethanols erhält man einen weißen, spröden Feststoff, der mittels eines Mörsers zermahlen wird. Mit Hilfe eines feinmaschigen Siebes (Maschenweite 1 mm) wird der erhaltene Feststoff von eventuell vorhandenen groben Anteilen befreit. Das Produkt fäll als feines, weißes Pulver an, das bei einer Temperatur ab 120°C erweicht.

### Vergleichsbeispiel 6

In einem 250-ml-Becherlgas werden 35 g PUR-Verdickungsmittel gemäß EP- EP-B 0 639 595 (entspr. US-A 5 594 087) und 65 g Harnstoff in 50 g Wasser suspendiert. Man erhält eine weißlich trübe, flüssige Mischung, die in einen 1-1-Einhalskolben überführt und möglichst gleichmäßig auf der zur Verfügung stehenden, inneren Oberfläche verteilt wird. Das in dem Kolben befindliche Gemisch wird in einem Temperiergefäß mit Trockeneis/Aceton-Mischung eingefroren. An das so gekühlte Gefäß wird Hochvakuum angelegt (< 0,5 mbar) und das in der Mischung enthaltene Wasser durch Sublimation entfernt. Nach vollständigem Entfernen des Wassers erhält man einen weißen, spröden Feststoff mit 35 % PUR-Anteil, der mittels eines Mörsers zermahlen wird. Mit Hilfe eines feinmaschigen Siebes (Maschenweite 1 mm) wird der erhaltene Feststoff von eventuell vorhandenen groben Anteilen befreit. Das Produkt fällt als feines, weißes Pulver an, das bei einer Temperatur ab 120°C erweicht.

### Vergleichsbeispiel 7

Es wurde wie im Beispiel 2 beschrieben gearbeitet, jedoch wurde ein Verhältnis Borchigen® 630 : Borchigel® L 76 von 1 : 1 (Gew./Gew., bezogen auf Feststoff) eingesetzt.

### Beispiel 8

Es wurde wie im Beispiel 2 beschrieben gearbeitet, jedoch wurde ein Verhältnis Borchigen® 630 : Borchigel® L 76 von 3 : 1 (Gew./Gew., bezogen auf Feststoff) eingesetzt.

### Vergleichsbeispiel 9

Es wurde wie im Beispiel 1 beschrieben gearbeitet, jedoch wurde anstelle von pyrogener Kieselsäure 100 g Calciumcarbonat (Omyacarb Extra CL) sowie 16,5 g Polyurethanverdicker gemäß EP-B 0 639 595 (entspr. US-A 5 594 087), 2,83 g Emulgator WN® (Bayer AG), 5,67 g Levalin® FD (Bayer AG) und 25 g Wasser eingesetzt.

### Beispiel 10

Es wurde wie im Beispiel 1 beschrieben gearbeitet, jedoch wurde anstelle von pyrogener Kieselsäure 100 g Calciumcarbonat (Omyacarb Extra CL) sowie 18,75 g Polyurethanverdicker gemäß der EP-B 0 639 595 (entspr. US-A 5 594 087), 2,08 g Emulgator WN (Bayer AG), 4,17 g Levalin® FD (Bayer AG) und 25 g Wasser eingesetzt.

### Vergleichsbeispiel 11

Es wurde wie im Beispiel 1 beschrieben gearbeitet, jedoch wurde anstelle von pyrogener Kieselsäure 50 g Finntalk® M03 sowie 75 g Polyurethanverdicker Borchigel® L 76 eingesetzt.

Es empfiehlt sich, nach der Vormischung der beiden Produkte dieses Gemisch zuerst im Trockenschrank bei 80°C vorzutrocknen und erst dann zu zerkleinern.

### Vergleichsbeispiel 12

Es wurde wie im Beispiel 1 beschrieben gearbeitet, jedoch wurde anstelle von pyrogener Kieselsäure 100 g Blanc fix micro sowie 50 g Polyurethanverdicker Borchigel® L 76 eingesetzt.

### Vereieichsbeispiel 13

Es wurde wie im Beispiel 1 beschrieben gearbeitet, jedoch wurde anstelle von pyrogener Kieselsäure 100 g Calcigloss® GU sowie 50 g Polyurethanverdicker Borchigel® L 75 N (Polyurethanverdicker mit Wirkstoff gemäß US-A 5 378 756, Beispiel 6, formuliert wie in US-A 5,378,756, Beispiel 4 beschrieben) eingesetzt.

### Vergleichsbeispiel 14

Es wurde wie im Beispiel 2 beschrieben gearbeitet, jedoch wurde anstelle von Borchigen® 630 500 g Borchigen® NA20 (eine wässrige Lösung eines Acrylatpolymers auf Basis von Ammoniumacrylat) sowie 133 g Polyurethanverdicker Borchigel® L 76 eingesetzt.

### Anwendungstechnische Prüfung der erfindungsgemäßen Verdickungsmittel-Formulierungen

### Herstellung der Anstrichfarbe

In einer 1000-ml-Flasche mit 100 g Glasperlen (∅ 3 mm) werden folgende Bestandteile im Skandex 30 Min. dispergiert:

| | |
|---|---|
| **A.** AMP (Aminomethylpropanol) | 1,25 g |
| Borchigen® ND*⁾ (25 %ig in H₂O) | 6,8 g |
| Entschäumer Neocryl® AP 2860 (20 %ig) | 1,6 g |
| TiO₂ RHD-2 (Fa. Tioxide) | 112,5 g |
| Methoxybutanol | 8,5 g |
| Propylenglykol | 8,5 g |
| Butyldiglykol | 8,5 g |
| H₂O | 22,35 g |
| | |
| **B.** Danach wird nach Zugabe von H₂O | 50,0 g |
| Neocryl® XK 62 (42 %ig) | 270,0 g |

| | |
|---|---|
| weitere 30 Min. dispergiert. Die Farbe wird von den Glasperlen befreit und nach einer Reifezeit von ca. 12 Stunden weiter untersucht. *⁾ (N,N-Dimethylcyclohelylamino 2-(2-Butoxyethoxy)ethyldihydrogenphosphat; CAS-Nr. 94200-24-5.) | |

Die erfindungsgemäße Verdickungsmittclformulierung kann entweder zum Gemisch A zudosiert werden oder dem fertigen Lack unter Rühren zugesetzt werden. Im letztgenannten Falle wird 15 Min. bei 1600 U/Min. mit Standardrührwerk nachgerührt.

Die Anlösungsgeschwindigkeit (Einrührbarkeit der erfindungsgemäßen Verdickungsmittel-Zubereitungen wird nach einer Skala von 1 (sehr gut) bis 5 (sehr schlecht) visuell beurteilt. Die Viskosität der Farbe wurde mit dem Haake VT 550, Messkörper SV DIN bei 10.3 s⁻¹ bzw. mit dem Rheostress® RS1 (Messgeometrie Platte/Platte) bei 10000 s⁻¹ gemessen.

In Tabelle 1 sind anwendungstechnische Tests mit den erfindungsgemäßen Verdickungsmittel-Zubereitungen in obiger Anstrichfarbe aufgeführt. Sie zeigen die exzellenten Eigenschaften der neuen Zubereitungen bei Verdickung wässriger Systeme.

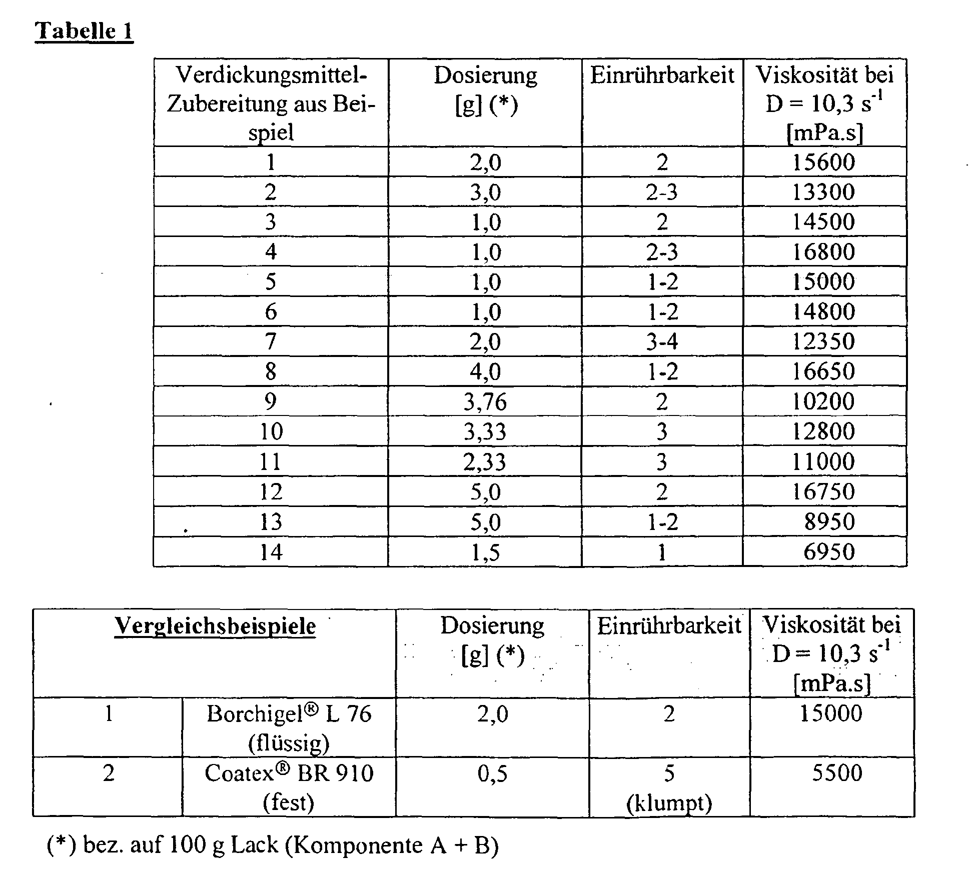

## Patentansprüche

1. Pulverförmige Verdickungsmittel-Zubereitungen, hergestellt durch Überführung von Gemischen, bestehend aus
a) mindestens einem Urethangruppen-aufweisenden, in Wasser löslichen oder dispergierbaren Verdickungsmittel in einer Menge von 0,5 bis 90 Gew.-%, bezogen auf das Gesamtgemisch,
b) mindestens einem bei Raumtemperatur festen wasserlöslichen Stoff ausgewählt aus Cellulose, Zucker, wasserlösliche Kohlenhydrate, wasserlösliche (Co)Polymer-Salze der Acryl-, Methyacryl- oder Asparaginsäure oder Harnstoff in einer Menge von 0,5 bis 90 Gew.-%, bezogen auf das Gesamtgemisch, wobei die Gesamtmente der Komponenten (a) und (b) mindestens 80 Gew.-% beträgt,
c) gegebenenfalls einem nichtionischen (gegebenenfalls) aromatischen oder aliphatischen Emulgator und gegebenenfalls
d) weiteren Hilfsmitteln, wobei der Gewichtsanteil der Komponenten (c) und (d) bei maximal 20 Gew.-%, bezogen auf das Gesamtgemisch, liegt,
in eine gelöste, suspendierte oder geschmolzene Form, wobei im Fall der Überführung in eine gelöste oder suspendierte Form sich anschließend ein Trocknungsverfahren anschließt und im Fall der Überführung in geschmolzener Form die Schmelze abgekühlt wird, und danach die erhaltenen Feststoffe gegebenenfalls nach Vermahlung in Pulverform überführt werden.

2. Verwendung der Verdickungsmittel-Zubereitungen gemäß Anspruch 1 zur Einstellung von rheologischen Eigenschaften wässriger Systeme.

3. Verwendung der Verdickungsmittel-Zubereitungen gemäß Ansprüchen 1 und 2 in wässrigen Kraftfahrzeug- und Industrielacken, Putz- und Anstrichfarben, Druck- und Textilfarben, Pigmentdruckpasten, wässrigen pharmazeutischen, kosmetischen Formulierungen, Pflanzenschutzformulierungen, Füllstoff- und Pigmentdispersionen, Zubereitungen von Waschmitteln, Klebstoffen, Wachsen und Polituren sowie für die Erdölförderung.

4. Verfahren zur Herstellung der Verdickungsmittelzubereitungen gemäß Anspruch 1, **dadurch gekennzeichnet, dass** Gemische bestehend aus
a) mindestens einem Urethangruppen-aufweisenden, in Wasser löslichen oder dispergierbaren Verdickungsmittel in einer Menge von 0,5 bis 90 Gew.-%, bezogen auf das Gesamtgemisch,
b) mindestens einem bei Raumtemperatur festen wasserlöslichen Stoff ausgewählt aus Cellulose, Zucker, wasserlösliche Kohlenhydrate, wasserlösliche (Co)Polymer-Salze der Acryl-, Methyacryl- oder Asparaginsäure oder Harnstoff in einer Menge von 0,5 bis 90 Gew.-%, bezogen auf das Gesamtgemisch, wobei die Gesamtmente der Komponenten (a) und (b) mindestens 80 Gew.-% beträgt,
c) gegebenenfalls einem nichtionischen (gegebenenfalls) aromatischen oder aliphatischen Emulgator und gegebenenfalls
d) weiteren Hilfsmitteln, wobei der Gewichtsanteil der Komponenten (c) und (d) bei maximal 20 Gew.-%, bezogen auf das Gesamtgemisch, liegt,
in eine gelöste, suspendierte oder geschmolzene Form überführt werden, wobei im Fall der Überführung in eine gelöste oder suspendierte Form sich anschließend ein Trocknungsverfahren anschließt und im Fall der Überführung in geschmolzener Form die Schmelze abgekühlt wird, und danach die erhaltenen Feststoffe gegebenenfalls nach Vermahlung in Pulverform überführt werden.

## Claims

1. Powdered thickener preparations produced by conversion of mixtures composed of
a) at least one urethane group-containing, water-soluble or water-dispersible thickener in a quantity of 0.5 to 90 wt. %, based on the total mixture,
b) at least one water-soluble substance solid at room temperature, selected from cellulose, sugars, water-soluble carbohydrates, water-soluble (co)polymer salts of acrylic, methacrylic or aspartic acid or urea in a quantity of 0.5 to 90 wt. %, based on the total mixture, the total quantity of components (a) and (b) being at least 80 wt. %,
c) optionally a non-ionic (optionally) aromatic or aliphatic emulsifier and optionally
d) further auxiliaries, the weight fraction of components (c) and (d) being not more than 20 wt. %, based on the total mixture,
into a dissolved, suspended or melted form, conversion into a dissolved or suspended form being followed by a drying process, and conversion into melted form by cooling of the melt, after which the solids obtained are converted, optionally after grinding, into powder form.

2. Use of the thickener preparations according to Claim 1 for adjusting rheological properties of aqueous systems.

3. Use of the thickener preparations according to Claims 1 and 2 in aqueous automotive and industrial lacquers, stucco and other paints, printing inks and textile inks, pigment printing pastes, aqueous pharmaceutical, cosmetic formulations, plant protection formulations, filler and pigment dispersions, preparations of detergents, adhesives, waxes and polishes, and also for petroleum extraction.

4. Process for producing the thickener preparations according to Claim 1, **characterized in that** mixtures composed of
a) at least one urethane group-containing, water-soluble or water-dispersible thickener in a quantity of 0.5 to 90 wt. %, based on the total mixture,
b) at least one water-soluble substance solid at room temperature, selected from cellulose, sugars, water-soluble carbohydrates, water-soluble (co)polymer salts of acrylic, methacrylic or aspartic acid or urea in a quantity of 0.5 to 90 wt. %, based on the total mixture, the total quantity of components (a) and (b) being at least 80 wt. %,
c) optionally a non-ionic (optionally) aromatic or aliphatic emulsifier and optionally
d) further auxiliaries, the weight fraction of components (c) and (d) being not more than 20 wt. %, based on the total mixture,
are converted into a dissolved, suspended or melted form, conversion into a dissolved or suspended form being followed by a drying process, and conversion into melted form by cooling of the melt, after which the solids obtained are converted, optionally after grinding, into powder form.

## Revendications

1. Compositions d'épaississants pulvérulentes, produites par transformation de mélanges composés de
a) au moins un épaississant renfermant des groupes uréthane, soluble ou dispersable dans l'eau, en une quantité de 0,5 à 90 % en poids, par rapport au mélange total,
b) au moins une substance hydrosoluble solide à la température ambiante, choisie parmi la cellulose, des sucres, des hydrates de carbone hydrosolubles, des sels de (co)polymères hydrosolubles, de l'acide acrylique, de l'acide méthacrylique ou de l'acide aspartique, ou de l'urée en une quantité de 0,5 à 90 % en poids, par rapport au mélange total, où la quantité totale des composants (a) et (b) est d'au moins 80 % en poids,
c) éventuellement un agent émulsifiant non ionique, (éventuellement) aromatique ou aliphatique, et éventuellement
d) des auxiliaires supplémentaires, où la proportion pondérale des composants (c) et (d) est d'au plus 20 % en poids, par rapport au mélange total,
en une forme dissoute, en suspension ou fondue, où, dans le cas de la transformation en une forme dissoute ou en suspension, il s'en suit un procédé de séchage, et dans le cas de la transformation en une forme fondue, la masse fondue est refroidie, après quoi les matières solides obtenues sont éventuellement transformées en une forme pulvérulentes, éventuellement après broyage.

2. Utilisation des compositions d'épaississants selon la revendication 1 pour ajuster les propriétés rhéologiques de système aqueux.

3. Utilisation des compositions d'épaississants selon les revendications 1 et 2 dans des vernis aqueux pour automobiles et industriels, des crépis et autres peintures, des encres d'impression et des encres textiles, des pâtes d'impression pigmentées, des formulations aqueuses pharmaceutiques et cosmétiques, des formulations phyto-protectrices, des dispersions de charges et de pigments, des compositions de détergents, d'adhésifs, de cires et de produits de polissage ainsi que pour l'extraction du pétrole.

4. Procédé de production des compositions d'épaississants selon la revendication 1, **caractérisé en ce que** des mélanges composés de
a) au moins un épaississant renfermant des groupes uréthane, soluble ou dispersable dans l'eau, en une quantité de 0,5 à 90 % en poids, par rapport au mélange total,
b) au moins une substance hydrosoluble solide à la température ambiante, choisie parmi la cellulose, des sucres, des hydrates de carbone hydrosolubles, des sels de (co)polymères hydrosolubles, de l'acide acrylique, de l'acide méthacrylique ou de l'acide aspartique, ou de l'urée en une quantité de 0,5 à 90 % en poids, par rapport au mélange total, où la quantité totale des composants (a) et (b) est d'au moins 80 % en poids,
c) éventuellement un agent émulsifiant non ionique, (éventuellement) aromatique ou aliphatique, et éventuellement
d) des auxiliaires supplémentaires, où la proportion pondérale des composants (c) et (d) est d'au plus 20 % en poids, par rapport au mélange total,
sont transformés en une forme dissoute, en suspension ou fondue, où, dans le cas de la transformation en une forme dissoute ou en suspension, il s'en suit un procédé de séchage, et dans le cas de la transformation en une forme fondue, la masse fondue est refroidie, après quoi les matières solides obtenues sont éventuellement transformées en une forme pulvérulente, éventuellement après broyage.
